# EUROPEAN PATENT SPECIFICATION

(11) **EP 0 210 666 B1**
(45) Date of publication and mention of the grant of the patent: **02.03.1994**
(21) Application number: 86110660.7
(22) Date of filing: 01.08.1986
(51) Int. Cl.: G09G 1/00

(54) **Apparatus and method for crt display screen**
Einrichtung und Verfahren für einen Kathodenstrahlanzeigebildschirm
Dispositif et méthode pour un écran d'affichage d'un TRC

(30) Priority: 02.08.1985 US 761687
(43) Date of publication of application: 04.02.1987
(73) Proprietor: ARABIC LATIN INFORMATION OF SYSTEMS INC. (Alis Inc.), St. Laurent Quebec H4T 1A7 (CA)
(72) Inventor: Bourbonnais, Jean, Mount Royal Quebec H3P 2J3 (CA); Froment, Serge, Rosmère Quebec, J7A 3R6 (CA); Cadieux, Pierre, Montreal Quebec, H2G 2N4 (CA)
(74) Representative: Casalonga, Axel

(56) References cited:
- EP-A- 0 144 657
- FR-A- 2 570 536
- IBM TECHNICAL DISCLOSURE BULLETIN, vol. 24, no. 8, January 1982, pages 4305-4307, New York, US; C.G. WARNECKE: "Mixed left-right, right-left display"
- IDEM

## Description

The invention relates to a method and apparatus which permits the insertion of text of two languages whose characters proceed in two opposite directions on a CRT display screen. More specifically, the invention relates to such a method and apparatus which is transparent to higher level software, specifically, the operation systems and application programs.

At times, when applying a primary text, of a primary language, whose characters proceed in a primary direction (e.g., a Latin text which proceeds from left to right) on a CRT display screen, it may be necessary to make an insertion of a secondary text of a secondary language whose characters proceed in a secondary, different direction (e.g., an Arabic text whose characters proceed from right to left or Japanese which is vertical). Under present methods, and with the present apparatus, the procedures for processing and handling the secondary language must be included as steps in the operating system of the application software (see for example IBM Technical Disclosure Bulletin, vol. 24, no. 8, January 1982, pages 4305-4307). Thus, each time a different operating system or application program is used which requires such insertion, the steps for handling of the secondary language must be included in that different operating system or application program. It is therefore clear that the present apparatus and method do not include a single piece of either hardware of software which is portable, i.e., will automatically be applied as appropriate to any operating system or application software without requiring additional specific program steps. This is, of course, inconvenient in that the procedures must be written into each operating system or application program.

It is therefore an object of the invention to provide a method and apparatus which permit the insertion of a primary text and a secondary text whose characters proceed in primary and secondary directions which are different from each other, on a CRT display screen.

It is a more specific object of the invention to provide such a method and apparatus which are transparent to higher level software.

In accordance with the invention, the video memory of a CRT display system is split into an application video memory and a CRT video memory. The two memories are interconnected by logic means for manipulating the primary and secondary texts. The invention is more particularly defined in the appended claims.

In accordance with the method, the character codes are applied to the application video memory. The logic manipulates the codes in accordance with the rules of the primary and secondary languages and provides data to the CRT video memory for driving the CRT controller to permit such insertion.

The invention will be better understood by an examination of the following description, together with the accompanying drawings, in which:
- FIGURE 1: illustrates a typical prior art system in block form;
- FIGURE 2: illustrates a system in accordance with the invention; and
- FIGURE 3: is a flow chart of the logic means interconnecting the application video memory and the CRT video memory.

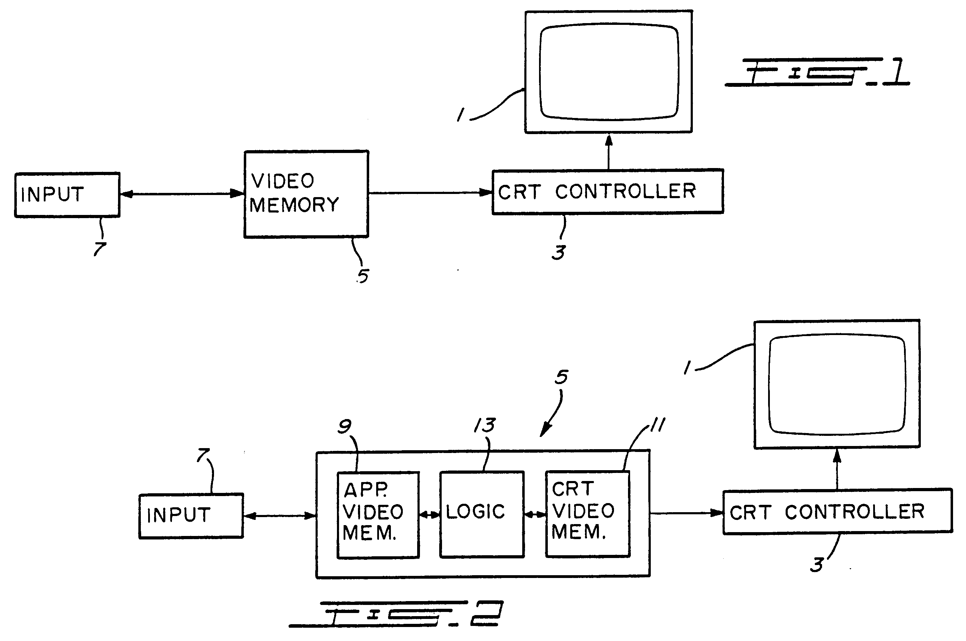

Referring to Figure 1, a presently available system comprises a CRT display screen 1 for displaying a written message comprising characters of the texts of appropriate languages. The characters will be displayed when the screen is given the appropriate control signals from the CRT controller 3. The CRT controller 3 is fed from the video memory 5, which is in turn fed from the character or display code input 7, for example, an application program.

Input means 7 places a character or display code in a specific memory area of the video memory 5. The means 7 are driven from programs and they can also retrieve the codes placed in the video memory 5 if required.

The video memory 5 is really an area of a larger memory and is designed to contain the information which will be displayed on the CRT display screen. The information is stored in video memory 5 by the programs of the means 7 and is available to the CRT controller 3.

The video memory 5 is always organized so that there is a linear (constant or geographically consistent) relationship between its memory cell numbers and the corresponding locations on the screen. Thus, if the video memory cell No. 0 corresponds to the leftmost uppermost location of the screen, and if the cell No. 1 corresponds to the location immediately to the right of the 0 location, and cell No. 2 corresponds to the location to the right of cell No. 1, then the information in cell 0, as above-mentioned, will be displayed in the leftmost uppermost location on the screen, and the information in cell No. 1 will be displayed in the space immediately to the right of the previous information, and the information in cell No. 2 will be displayed in the space on the screen to the right of the information displayed for cell 1.

This has significance in that, in presently available methods, the secondary language is inserted into the CRT display screen by sliding all of the displayed characters one space over in the primary direction and inserting the next character in the recently vacated space. This is illustrated below wherein the primary language is Latin (English) and the secondary language is Arabic:

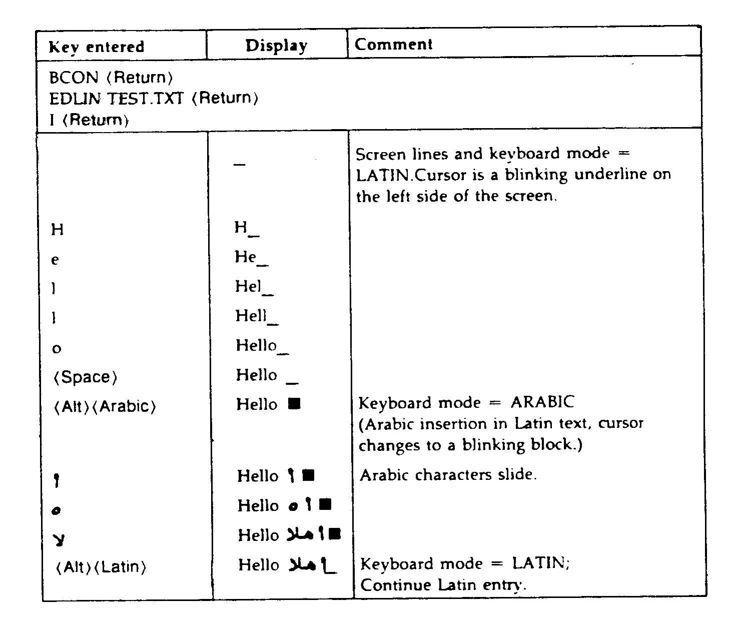

As can be seen, with the primary language, the characters proceed in the primary direction (left to right), and the cursor precedes the characters in the primary direction. The cursor, in effect, slides in the primary direction in advance of each character to be inserted.

In the secondary direction, the cursor once again precedes the characters in the primary direction. However, each time a character is inserted, those characters already displayed, and the cursor, slide one space over in the primary direction. The newly added character fills the space vacated by the character which had been inserted in the previous step.

With this arrangement, the relation of the video memory cell contents and the screen column contents (of the CRT display screen) is as follows:

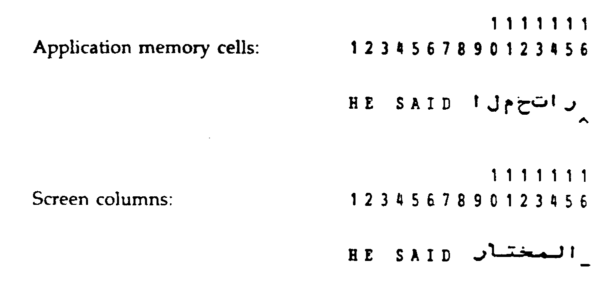

In this situation, screen operations such as cursor movement, replacement or deletion of characters, and scrolling will not have the expected effects. For example, what is in memory cell 15 is now in fact displayed on screen column 9. If the application does an absolute cursor addressing movement to column 15 to output a blank with the intention of erasing the last letter of the Arabic word, it will in fact position the cursor on the screen at column 15 and erase the first letter instead. Obviously, this will not give the expected results.

It is therefore necessary to ensure that the chronological order of the appearance of data (in the memory cells) corresponds with the geographical order (on the display screen). That is, the screen should be numbered as follows:

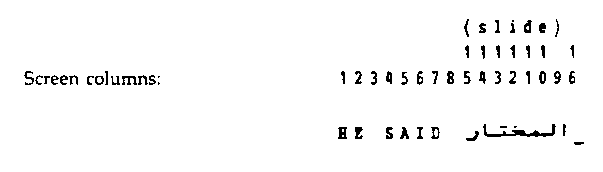

In this way, the application requesting the cursor to be at column 15 will effectively position the cursor on the desired character. As will be seen, in accordance with the method and apparatus herein, this effect will be achieved.

The CRT controller is an electronic subsystem which converts the character (i.e., display) codes contained in the video memory, in specific, ordered locations, into a set of control signals which will make the CRT display screen display these characters.

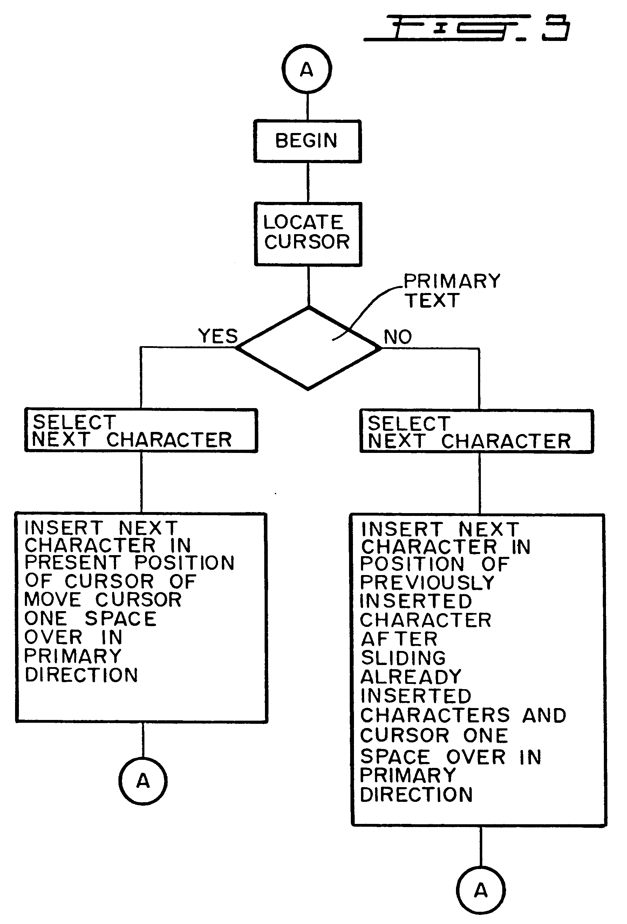

In order to effect the advantages as above described, a system as illustrated in Figure 2 is used in accordance with the invention. As can be seen, in the inventive system, the video memory 5 is split into an application video memory 9 and a CRT video memory 11. The memories 9 and 11 are interconnected by logic means 13. The logic means manipulates the text of the primary and secondary languages in accordance with the rules of these languages. The logic means is a processor, and a flow chart of the program for driving the processor is illustrated in Figure 3. That is, the characters of the secondary language will slide one space as above described. In addition, the logic means will "renumber" the cells of the CRT memory so that, when the text of a secondary language is being processed, the numbering of the cells will proceed in the secondary direction. Thus, the contents of like numbered cells in the application and CRT video memories will be alike, although the chronological ordering of the numbering of the cells will not be the same.

The column lines of the CRT display screen will be "renumbered" to correspond with the numbering of the CRT memory. Thus, screen operations such as cursor movements, replacements or deletions of characters and scrolling will have the expected effect.

In addition, the apparatus and method is transparent to the operating systems and application programs. The user and the programmer are not aware of what is going on. They merely enter the characters and notice that they appear in their correct order on the screen.

In order for the logic means to provide manipulations for the secondary language, it must first receive a signal that it is now in a secondary language mode. This signal could be provided by, for example, a separate key on the keyboard. When the signal for the secondary text is given, then the logic means will proceed from the right-hand side of the flow chart. When the signal is removed, and at all other times, the logic means will proceed down the left-hand side of the flow chart.

Although a particular embodiment has been described, this was for the purpose of illustrating, but not limiting, the invention. Various modifications, which will come readily to the mind of one skilled in the art, are within the scope of the invention as defined in the appended claims.

## Claims

1. Method for permitting display of a primary text of a primary language whose characters proceed in a primary direction, and a secondary text of a secondary language, whose characters proceed in a different secondary direction on a display screen of a CRT display system which further includes input means, video memory means and a CRT controller, coded characters being received from said input means into said video memory means in a chronological order; said coded characters being received according to the rules of the primary and secondary languages and being manipulated in such a manner that they are delivered to the CRT controller in a geographical order to be displayed on the display screen in said geographical order;
characterized in that said coded characters are applied in said chronological order to an application video memory, are then manipulated by logic means driven by a program containing instructions relating to said rules, said logic means interconnecting said application video memory and a CRT video memory, said manipulated coded characters being delivered by the CRT video memory to the CRT controller in said geographical order and in that simultaneously the cells of the CRT memory are renumbered by said logic means so that when the text of a secondary language is being processed, the numbering of the cells proceeds in the secondary direction so that the contents of like numbered cells in the application and CRT video memories will be alike, whereby the display is carried out in a manner that applies to unmodified application softwares or operating systems, existing softwares and program's logic and data otherwise not provided with commands specific to the proceeding direction of said text and all screen operations such as cursor movement, and replacement or deletion of characters and scrolling have the expected effects.

2. A method as defined in claim 1 characterized in that it further includes the step of providing a signal when the secondary language is to be inserted, to instruct the systems that the secondary language is now being inserted.

3. Apparatus for carrying out the method of claim 1 and 2, comprising:
a CRT display screen (1);
a CRT controller (3) connected to said CRT display screen for controlling the display on said CRT display screen by converting the character codes in a video memory means (5) to control signals for displaying the characters of the character codes in an ordered relationship on said CRT display screen (1);
said video memory means (5) being connected to said CRT controller; and
input means (7) for applying character codes to said video memory means; characterized by said video memory means (5) being split into an application video memory (9), connected to said input means (7) and a CRT video memory (11) connected to said CRT controller (3);
said application video memory (9) receiving from said input means coded characters which are arranged in a chronological order in said application video memory;
logic means (13) driven by a program containing instructions relating to the rules of the primary and secondary languages, said logic means interconnecting said application video memory (9) and said CRT video memory (11); said logic means being adapted to receive the coded characters in a chronological order from said application video memory, to manipulate said coded characters according to said rules and to deliver to the CRT video memory said coded characters in a different geographical order for display on said CRT display screen in said geographical order said logic means simultaneously renumbering the cells of the CRT video memory so that when the text of a secondary language is being processed, the numbering of the cells proceeds in the secondary direction and the contents of like numbered cells in the application and CRT Video memories will be alike in both languages.

4. The apparatus as defined in claim 3 characterized in that when said primary language is being processed, the characters of the primary text proceed in said primary direction and a cursor precedes the last characters in said primary direction; and
when said secondary language is being processed, when a next character is inserted, the already displayed characters and the cursor slide one space in said primary direction and the next character takes up the space vacated by the character previously inserted, in a manner that is transparent to said input means (7) for applying character codes of said texts to said application video-memory (9) in the manner used by unmodified application sofware or operating systems, existing sofware program's logic and data, otherwise not provided with bidirectional script support.

5. The apparatus as defined in any preceding claims, characterized in that it further includes means for providing a signal that the secondary language is now being inserted.

## Patentansprüche

1. Verfahren zum Gestatten der Anzeige eines Primärtextes einer Primärsprache, deren Zeichen in einer Primärrichtung verlaufen, und eines Sekundärtextes einer Sekundärsprache, deren Zeichen in einer verschiedenen Sekundärrichtung verlaufen, auf einem Anzeigebildschrim eines Kathodenstrahlanzeigesystems, das weiter eine Eingabeeinrichtung, eine Videospeichereinrichtung und einen Kathodenstrahlregler enthält, wobei codierte Zeichen von der Eingabeeinrichtung in der Videospeichereinrichtung in einer chronologischen Reihenfolge empfangen werden; wobei die codierten Zeichen gemäß den Regeln der Primär- und Sekundärsprache empfangen werden und auf solche Weise behandelt werden, daß sie in einer geographischen Reihenfolge zur Anzeige auf dem Anzeigebildschirm in der geographischen Reihenfolge zu dem Kathodenstrahlröhrenregler abgegeben werden;
dadurch **gekennzeichnet,** daß die codierten Zeichen in der chronologischen Reihenfolge zu einem Anwendungsvideospeicher gegeben werden, dann durch die Logikeinrichtung behandelt werden, angesteuert durch ein Programm enthaltende Instruktionen, betreffend die Regeln, wobei die Logikeinrichtung den Anwendungsvideospeicher und einen Kathodenstrahlvideospeicher miteinander verbindet, wobei die behandelten codierten Zeichen durch den Kathodenstrahlvideospeicher zu dem Kathodenstrahlregler in der geographischen Reihenfolge abgegeben werden, und daß die Zellen des Kathodenstrahlspeichers gleichzeitig durch die Logikeinrichtung wieder numeriert werden, so daß, wenn der Text einer Sekundärsprache verarbeitet wird, die Numerierung der Zellen in der Sekundärrichtung fortschreitet, so daß der Inhalt von gleich numerierten Zellen im Anwendungs- und Kathodenstrahlvideospeicher gleich sind, wodurch die Anzeige auf eine Weise ausgeführt wird, die Anwendung auf nicht modifizierte Anwendungssoftwares oder Betriebssysteme vorhandener Softwares und Programmlogik und -daten findet, die sonst nicht bei für die Verlaufsrichtung des Textes speziellen Befehlen versehen sind und sämtliche Bildschirmoperationen wie Cursorbewegung und Austausch oder Auslöschen von Zeichen und Bildschirmdurchlauf haben die gewünschten Wirkungen.

2. Verfahren nach Anspruch 1, dadurch **gekennzeichnet,** daß es weiter den Schritt umfaßt, daß ein Signal vorgesehen wird, wenn die Sekundärsprache eingefügt werden soll, um die Systeme zu instruieren, daß die Sekundärsprache nun eingefügt wird.

3. Einrichtung zur Durchführung des Verfahrens nach Anspruch 1 und 2, umfassend:
- einen Kathodenstrahlanzeigebildschirm (1);
- einen Kathodenstrahlregler (3), der mit dem Kathodenstrahlanzeigebildschirm verbunden ist, um die Anzeige auf dem Kathodenstrahlanzeigebildschirm zu steuern, indem die Zeichencodes in einer Videospeichereinrichtung (5) umgewandelt werden, um Signale zur Anzeige der Zeichencodes in einer geordneten Beziehung auf dem Kathodenstrahlanzeigebildschirm (1) zu steuern;
- wobei die Videospeichereinrichtung (5) mit dem Kathodenstrahlregler verbunden ist; und
- eine Eingabeeinrichtung (7) zum Geben von Zeichencodes auf die Videospeichereinrichtung;
dadurch **gekennzeichnet,** daß die Videospeichereinrichtung (5) in eine mit der Eingabeeinrichtung (7) verbundenen Anwendungsvideospeicher (9) und einen mit dem Kathodenstrahlregler (3) verbundenen Kathodenstrahlvideospeicher (11) aufgespalten ist;
- wobei der Anwendungsvideospeicher (9) von der Eingabeeinrichtung codierte Zeichen empfängt, die in einer chronologischen Reihenfolge im Anwendungsvideospeicher angeordnet sind;
- eine Logikeinrichtung (13), die durch ein Instruktionen betreffend die Regeln der Primär- und Sekundärsprache enthaltendes Programm angesteuert wird, wobei die Logikeinrichtung den Anwendungsvideospeicher (9) und den Kathodenstrahlvideospeicher (11) miteinander verbindet; wobei die Logikeinrichtung in der Lage ist, die codierten Zeichen in einer chronologischen Reihenfolge von dem Anwendungsvideospeicher zu empfangen, um die codierten Zeichen gemäß den Regeln zu behandeln und die codierten Zeichen in einer verschiedenen geographischen Reihenfolge an den Kathodenstrahlvideospeicher für eine Anzeige auf den Kathodenstrahlanzeigebildschirm in der geographischen Reihenfolge abzugeben, wobei die Logikeinrichtung die Zellen des Kathodenstrahlvideospeichers gleichzeitig neu numeriert, so daß, wenn der Text einer Sekundärsprache verarbeitet wird, die Numerierung der Zellen in der Sekundärrichtung fortschreitet und der Inhalt von gleich numerierten Zellen im Anwendungs- und Kathodenstrahlvideospeicher in beiden Sprachen gleich ist.

4. Einrichtung, nach Anspruch 3, dadurch **gekennzeichnet,** daß, wenn die Primärsprache verarbeitet wird, die Zeichen des Primärtextes in der Primärrichtung verlaufen und ein Cursor das letzte Zeichen in der Primärrichtung vorhergeht; und
wenn die Sekundärsprache verarbeitet wird, wenn ein nächstes Zeichen eingefügt wird, sich die bereits angezeigten Zeichen und der Cursor um einen Zwischenraum in der Primärrichtung verschieben und das nächste Zeichen den durch das vorher eingefügte Zeichen leergemachten Zwischenraum einnimmt auf solche Weise, die für die Eingabeeinrichtung (7) transparent ist, um Zeichencodes der Texte auf den Anwendungsvideospeicher (9) auf die Weise zu geben, die bei nicht modifizierter Anwendungssoftware oder Betriebssystemen, vorhandener Softwareprogrammlogik und Daten verwendet wird, die sonst nicht mit einer Zweirichtungsschriftartunterstützung versehen sind.

5. Einrichtung nach beliebigen vorhergehenden Ansprüchen, dadurch **gekennzeichnet,** daß sie weiter eine Einrichtung enthält, um ein Signal vorzusehen, daß die Sekundärsprache nun eingefügt wird.

## Revendications

1. Procédé pour permettre l'affichage d'un texte primaire en un langage primaire dont les caractères avancent dans une direction primaire et un texte secondaire en un langage secondaire dont les caractères avancent dans une direction secondaire différente sur un écran d'affichage d'un système d'affichage à TRC (tube à rayons cathodique) qui comprend, en outre, un moyen d'entrée, un moyen de mémorisation vidéo et un contrôleur de TRC, les caractères codés étant reçus du moyen d'entrée et introduits dans ledit moyen de mémorisation vidéo dans un ordre chronologique ; lesdits caractères codés étant reçus conformément aux règles des langages primaire et secondaire et étant manipulés de manière telle qu'ils sont délivrés au contrôleur de TRC dans un ordre géographique de manière à être affichés sur l'écran d'affichage dans ledit ordre géographique,
**caractérisé** en ce que lesdits caractères codés sont appliqués dans ledit ordre chronologique à une mémoire vidéo d'application, sont ensuite manipulés par un moyen logique commandé par un programme contenant des instructions relatives auxdites règles, ledit moyen logique reliant mutuellement ladite mémoire vidéo d'application et une mémoire vidéo de TRC, lesdits caractères codés manipulés étant délivrés par la mémoire vidéo de TRC au contrôleur de TRC dans ledit ordre géographique et en ce que simultanément les cellules de la mémoire de TRC sont renumérotées par ledit moyen logique de manière que lorsque le texte d'un langage secondaire est en cours de traitement, la numérotation des cellules s'effectue dans la direction secondaire de sorte que le contenu des cellules de même numéro dans les mémoires vidéo d'application et de TRC sont identiques, grâce à quoi l'affichage est effectué d'une manière qui s'applique à des logiciels d'application ou à des systèmes d'exploitation non modifiés, à des logiciels existants et à des logiques et des données de programme par ailleurs non-pourvues de commande spécifique à la direction d'avance dudit texte et toutes les opérations relatives à l'écran, comme par exemple un déplacement de curseur et le remplacement ou l'effacement de caractères et le défilement d'image produisent les effets escomptés.

2. Procédé selon la revendication 1, **caractérisé** en ce qu'il comprend, en outre, l'étape consistant à fournir un signal lorsque le langage secondaire doit être inséré, de manière à avertir le système que le langage secondaire est maintenant en cours d'insertion.

3. Appareil pour mettre en oeuvre le procédé selon les revendications 1 et 2, comprenant :
- un écran d'affichage (1) de TRC;
- un contrôleur (3) de TRC connecté audit écran d'affichage de TRC pour commander l'affichage sur ledit écran d'affichage de TRC par conversion des codes de caractères présents dans un moyen de mémorisation vidéo (5) en signaux de commande pour l'affichage des codes de caractères dans une disposition mutuelle ordonnée sur ledit écran d'affichage (1) de TRC ;
- ledit moyen de mémorisation vidéo (5) étant connecté audit contrôleur de TRC ; et
- un moyen d'entrée (7) pour appliquer les codes de caractères audit moyen de mémorisation vidéo,
**caractérisé** en ce que ledit moyen de mémorisation vidéo (5) est divisé en une mémoire vidéo d'application (9), connectée audit moyen d'entrée (7), et une mémoire vidéo (11) de TRC connectée audit contrôleur (3) de TRC ;
- ladite mémoire vidéo d'application (9) recevant dudit moyen d'entrée des caractères codés qui sont disposés dans un ordre chronologique dans ladite mémoire vidéo d'application ;
- un moyen logique (13) commandé par un programme contenant des instructions relatives aux règles des langages primaire et secondaire, ledit moyen logique reliant mutuellement ladite mémoire vidéo d'application (9) et ladite mémoire vidéo (11) de TRC ; ledit moyen logique étant adapté pour recevoir les caractères codés dans un ordre chronologique à partir de ladite mémoire vidéo de d'application, pour manipuler lesdits caractères codés selon lesdites règles et pour fournir à la mémoire vidéo de TRC lesdits caractères codés dans un ordre géographique différent pour un affichage sur ledit écran d'affichage de TRC dans ledit ordre géographique, ledit moyen logique renumérotant simultanément les cellules de la mémoire vidéo de TRC de manière que lorsque le texte d'un langage secondaire est en cours de traitement, la numérotation des cellules se poursuit dans la direction secondaire et le contenu des cellules de même numéro dans les mémoires vidéo d'application et de TRC sont pareils dans les deux langages.

4. Appareil selon la revendication 3, **caractérisé** en ce que lorsque ledit langage primaire est en cours de traitement, les caractères du texte primaire avancent dans ladite direction primaire et un curseur précède les derniers caractères dans ladite direction primaire ; et
lorsque ledit langage secondaire est en cours de traitement, quand un caractère suivant est inséré, les caractères déjà affichés et le curseur se déplacent d'un espace dans ladite direction primaire et le caractère suivant occupe l'espace rendu vacant par le caractère inséré antérieurement, d'une manière qui est transparente vis-à-vis dudit moyen d'entrée (7) pour appliquer les codes de caractères desdits textes à ladite mémoire vidéo d'application (9) de la manière utilisée par un logiciel d'application ou des systèmes d'exploitation non-modifiés, des logiques et des données de programme de logiciels existants, non-pourvus par ailleurs d'instructions d'écriture bidirectionnelle.

5. Appareil selon l'une quelconque des revendications précédentes, **caractérisé** en ce qu'il comprend, en outre, un moyen pour fournir un signal indiquant que le langage secondaire est maintenant en cours d'insertion.
